(19) Europäisches Patentamt
European Patent Office
Office européen des brevets

(11) **EP 4 446 372 A1**

(12) **EUROPEAN PATENT APPLICATION**
published in accordance with Art. 153(4) EPC

(43) Date of publication:
**16.10.2024 Bulletin 2024/42**

(21) Application number: **22903934.2**

(22) Date of filing: **01.11.2022**

(51) International Patent Classification (IPC):
*C08J 11/08* (2006.01)    *B29B 17/00* (2006.01)
*B29B 17/02* (2006.01)    *B32B 7/06* (2019.01)

(52) Cooperative Patent Classification (CPC):
**B29B 17/00; B29B 17/02; B32B 7/06; C08J 11/08;**
Y02W 30/62

(86) International application number:
**PCT/JP2022/040912**

(87) International publication number:
**WO 2023/106002 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.12.2021 JP 2021199776
24.05.2022 JP 2022084238**

(71) Applicant: **Toray Industries, Inc.
Tokyo 103-8666 (JP)**

(72) Inventors:
• **HIGASHIDA, Yoshihisa**
**Otsu-shi, Shiga 520-8558 (JP)**
• **TANINO, Kiyoshi**
**Otsu-shi, Shiga 520-8558 (JP)**
• **WATANABE, Kazutaka**
**Otsu-shi, Shiga 520-8558 (JP)**

(74) Representative: **Hoefer & Partner Patentanwälte
mbB
Pilgersheimer Straße 20
81543 München (DE)**

(54) **METHOD FOR SEPARATING COATING FILM FROM COATED FILM AND DEVICE FOR SEPARATING COATING FILM**

(57) There is provided a coating film removing method that can remove a coating film at a high speed by dissolving from the surface of a coated film including the coating film containing a water-soluble resin the water-soluble resin in a short time using a solvent. The coating film removing method for removing the coating film from the coated film according to the present invention is the method for removing the coating film from the coated film including the coating film on at least one surface of a base film, and includes: forming a scratch, a cut, or a hole in a coating film on a surface on a coating film side of the coated film, or forming the scratch, the cut, or the hole that reaches the coating film on a surface on a no coating film side of the coated film; then bringing a cleaning liquid into contact with the coating film; and then removing the coating film containing the cleaning liquid from the coated film.

FIG.1

EP 4 446 372 A1

## Description

Field

The present invention relates to a coating film removing method and a coating film removing equipment that can efficiently remove a coating film on a surface of a thermoplastic resin film.

Background

While plastics are used in various fields, plastics are considered as materials such as microplastics that cause marine pollution, and reduction of an environmental load due to plastics is urgently needed.

Furthermore, in recent years, development of Internet of Things (IoT) brings about an increase in the number of electronic devices such as CPUs mounted on computers and smartphones, and, accordingly, the number of MultiLayer Ceramic Capacitors (MLCC) required to drive the electronic devices has also rapidly increased. A general manufacturing method for this MLCC includes a step of using as a carrier sheet a release film obtained by forming a release layer on a plastic base film, and forming a ceramic green sheet layer on this release film, and a step of peeling this ceramic green sheet layer to obtain a ceramic green sheet.

In this step, the release film from which the ceramic green sheet layer has been peeled is discarded as an unnecessary material. That is, an increase in waste of release films due to a rapid increase in the number of MLCCs in recent years has become an environmental problem, and efforts for reusing a plastic base film have been actively made.

To reuse discarded release films, the release films may be collected, pulverized, and formed into resin chips, then remelted, and formed as films to obtain recycled films.

However, components of a release layer included in a release film generally have a composition different from components constituting a base film from the viewpoint of releasability, and the components of the release layer are present as foreign materials when the release film with the release layer is pulverized into resin chips, then remelted, and formed as a film, and therefore it is difficult to stably form a film.

Furthermore, even when the film can be formed, the release layer is present as a foreign material in the obtained film, and therefore it is not possible to avoid quality deterioration due to coloring of the film or a change in surface composition, and recycle the film into a film having quality equivalent to that of the original base film.

Accordingly, to recycle the release film as a recycled film, it is necessary to remove the components of the release layer included in the release film to a very small amount of residue at such a level that the recycled film has no problem in quality. Furthermore, it is desired to achieve circulation of obtaining the collected and pulverized highly pure resin chips, then remelting the resin chips, and recycling the resin chips as a recycled film at low cost for a long period of time.

However, to achieve this circulation, it is necessary to spend an enormous amount of time for the removal processing of the release layer, and therefore an increase in cost of the recycled film is inevitable.

Patent Literature 1 discloses, as a method for removing a release component from a release film, a method for using a release film having a water-soluble resin layer formed between a base film and a release layer, immersing the release film in a hot liquid tank for two seconds or more, then brushing the surface of the release film with a brush roll, and thereby removing the release layer.

Citation List

Patent Literature

Patent Literature 1: 2004-363140 A

Summary

Technical Problem

To aim for low cost, it is very effective to increase a processing speed. The method disclosed in Patent Literature 1 assumes that, when the processing speed is increased, the contact time between the release layer and a hot water in the hot liquid tank becomes short and becomes less than two seconds. When the contact time becomes less than two seconds, there is a problem that the water-soluble resin layer is not eluted in time and the release component cannot be removed, and, moreover, the water-soluble resin layer itself also remains on the film as a foreign material, and therefore highly pure resin chips cannot be obtained.

To bring the release layer into contact with the hot water in the hot liquid tank for two seconds or more while increasing the processing speed, it is necessary to increase the size of the hot liquid tank and increase a path length, and thus the hot liquid tank increased to an unrealistic size is required. Furthermore, the increase in size of the hot liquid tank causes a problem that the amount of a waste liquid in which the water-soluble resin layer is dissolved increases, and not only processing cost significantly increases, but also an environmental load remarkably increases.

Therefore, the present invention provides a coating film removing method and a coating film removing equipment that remove a coating film from a coated film, and that can remove a coating film at a high speed by forming scratches or the like on a surface of the coated film after use, and dissolving a water-soluble resin in a short time using a cleaning liquid.

Solution to Problem

[1] A coating film removing method according to the present invention to solve the above-mentioned problem is a coating film removing method for removing a coating film from a coated film including the coating film on at least one surface of a base film. The method includes: forming a scratch, a cut, or a hole in the coating film on a surface on a coating film side of the coated film, or forming the scratch, the cut, or the hole that reaches the coating film on a surface on a no coating film side of the coated film; then bringing a cleaning liquid into contact with the coating film; and then removing the coating film containing the cleaning liquid from the coated film.

[2] In the coating film removing method according to the above-mentioned [1], while the coated film is conveyed, it is preferable that the scratch is formed such that an angle (acute angle) formed by a longitudinal direction of the scratch and a conveyance direction is 60 degrees or less, or the cut is formed such that an angle (acute angle) formed by a longitudinal direction of the cut and the conveyance direction is 60 degrees or less.

[3] In the coating film removing method according to the above-mentioned [1] or [2], it is preferable that the coating film contains a water-soluble resin.

[4] In the coating film removing method according to any one of the above-mentioned [1] to [3], it is preferable that the coating film contains a curable silicone resin.

[5] In the coating film removing method according to any one of the above-mentioned [1] to [4], it is preferable that the cleaning liquid is water.

[6] A coating film removing equipment according to the present invention to solve the above-mentioned problem is a coating film removing equipment configured to remove a coating film from a coated film including the coating film on at least one surface of a base film. The removing equipment includes: a coating film damaging mechanism configured to form a scratch, a cut, or a hole in the coating film on a surface on a coating film side of the coated film, or form the scratch, the cut, or the hole that reaches the coating film on a surface on a no coating film side of the coated film; a cleaning liquid supplying mechanism configured to supply a cleaning liquid to the coating film of the coated film in which the scratch, the cut, or the hole has been formed; and a removing mechanism configured to remove the coating film containing the cleaning liquid from the coated film.

[7] It is preferable that the coating film removing equipment according to the above-mentioned [6] further includes a conveyance mechanism configured to convey the coated film, wherein the coating film damaging mechanism is configured to form the scratch such that an angle (acute angle) formed by a longitudinal direction of the scratch and the conveyance direction is 60 degrees or less, or form the cut such that an angle (acute angle) formed by a longitudinal direction of the cut and the conveyance direction is 60 degrees or less.

[8] The coating film removing equipment according to the above-mentioned [6] or [7] may further include: an unwinding device configured to unwind the coated film wound in a roll; and a winding device configured to wind the base film from which the coating film has been removed. Advantageous Effects of Invention

By using the coating film removing method and the coating film removing equipment that remove a coating film from a coated film according to the present invention, it is possible to dissolve from the surface of the coated film a water-soluble resin in a short time using cleaning liquid, and remove the coating film at a high speed.

Brief Description of Drawings

FIG. 1 is a schematic view of a removing equipment 101 according to a first embodiment of the present invention.
FIG. 2 is a schematic view of a removing equipment 201 according to a second embodiment of the present invention.
FIG. 3 is a schematic view of a removing equipment 301 according to a third embodiment of the present invention.
FIG. 4 is a schematic top view of the coating film damaging mechanism 6 in FIG. 3.
FIG. 5 is a schematic view of a removing equipment 401 according to a fourth embodiment of the present invention.
FIG. 6 is a schematic top view of a coating film damaging mechanism 6 in FIG. 5.
FIG. 7 is a schematic view of a removing equipment 501 according to a fifth embodiment of the present invention.
FIG. 8 is a schematic view of a removing equipment 601 according to a sixth embodiment of the present invention.
FIG. 9 is a schematic view of a removing equipment 701 according to a seventh embodiment of the present invention.
FIG. 10 is a schematic top view of a coating film damaging mechanism 6 in FIG. 9.
FIG. 11 is a schematic view of a removing equipment 801 according to an eighth embodiment of the present invention.
FIG. 12 is a schematic top view of a coating film damaging mechanism 6 in FIG. 11.
FIG. 13 is a schematic view of a removing equipment 901 according to a ninth embodiment of the present invention.

FIG. 14 is a schematic top view of a coating film damaging mechanism 6 in FIG. 13.

FIG. 15 is a schematic view of a removing equipment 111 according to a tenth embodiment of the present invention.

FIG. 16 is a schematic top view of a coating film damaging mechanism 6 in FIG. 15.

Description of Embodiments

The inventors of the present invention have intensively studied a method that can dissolve a resin of a coating film in a short time using a cleaning agent, and remove the coating film at a high speed, and, as a result, have found a following coating film removing method and coating film removing equipment for a coated film.

[Target coated film]

The coating film removing method for the coated film according to the present invention is a method for cleaning a coating film and peeling and removing the coating film from a base film targeting at the coated film including the coating film on a surface of the base film. The coating film may be provided on one surface or both surfaces of the base film, and is not particularly limited.

A coating film having any composition may be a target, and a coating film of a target coated film is preferably a coating film containing a water-soluble resin that takes a load or the like on environmental into account. The water-soluble resin is preferably a water-soluble resin whose main component is at least one type of a water-soluble polyester resin, a polyester urethane resin, an acrylic resin, an ethylene ionomer resin, a polyvinyl alcohol resin, a polyvinyl pyrrolidone resin, an ethylene-vinyl alcohol resin, and a starch.

The coating film containing the water-soluble resin may be a single layer body containing the water-soluble resin, a layered product of two or more layers containing the water-soluble resin, or a layered product of a layer that contains the water-soluble resin and a layer that does not contain the water-soluble resin.

Furthermore, the coated film is particularly preferably a coated release film containing a release component in addition to the water-soluble resin in part of the coating film, and can efficiently exhibit the effect of removing the coating film. The release component described herein is a component that increases a contact angle of the coating film surface with respect to water, that is, reduces surface energy of the coating film. Examples of the release component include a curable silicone resin such as a thermosetting silicone resin compound having dimethylsiloxane as a main skeleton, and a UV-curable silicone resin compound obtained by blending a photoinitiator with organopolysiloxane containing an acryloyl group or a methacryloyl group and irradiating the resulting substance with UV light to cure, a compound having a long chain alkyl group, and a compound having fluorine. In the coating film, the water-soluble resin and the release component may be mixed, or a layer containing the water-soluble resin and a layer containing the release component may be layered. In the case of a layered coating film, it is preferable that the layer containing the water-soluble resin is formed just above the base film, and then the layer containing the release component is formed on the outermost surface. It is particularly preferable to use for the release component the thermosetting silicone resin compound having, as the main skeleton, dimethylsiloxane having high water permeability.

[Coating film removing method for removing coating film from coated film]

The method for removing the coating film from the coated film (hereinafter, referred to as a coating film removing method) according to the present invention includes forming scratches, cuts, or holes in the coating film on a surface on a coating film side of the coated film, or forming the scratches, the cuts, or the holes that reach the coating film on a surface on a no coating film side of the coated film, then bringing a cleaning liquid into contact with the coating film, and then removing the coating film containing the cleaning liquid from the coated film. That is, the coating film removing method is characterized in forming the scratches, the cuts, or the holes in the coating film before bringing the cleaning liquid into contact with the coating film, and makes the cleaning liquid efficiently permeate the coating film and dissolves the coating film in a short time.

Here, "forming scratches" means roughening the coating film surface and forming irregularities thereon by physically rubbing the coating film, "forming cuts" means bringing a sharp object into contact with the coating film, and thereby forming cuts in the coating film, and "forming holes" means forming round holes, polygonal holes, or the like in the coating film.

Dissolution of the water-soluble resin proceeds as the cleaning liquid permeates from the coating film surface. By damaging the coating film, a contact area with the cleaning liquid increases, and the irregularities, the cuts, or the holes formed in the coating film make the cleaning liquid easily spread to a deeper position in a thickness direction of the coating film, so that it is possible to dissolve the water-soluble resin in a short time. In a case where the coating film of the target coated film is a coating film obtained by layering the layer containing the water-soluble resin just above the base film, and then the layer containing the release component on the outermost surface, it is possible to efficiently guide the cleaning liquid to the layer containing the water-soluble resin located in a lower layer by forming scratches, cuts, or holes that penetrate the outermost surface layer.

At the same time, by forming scratches, cuts, or holes that reach the layer containing the water-soluble resin, the contact area with the cleaning liquid increases, and the irregularities, the cuts, or the holes formed in the layer containing the water-soluble resin make the cleaning liquid easily spread to the deeper position in the thickness direction of the coating film, so that it is possible to dissolve the water-soluble resin in a short time. Furthermore, the scratches, the cuts, and the holes may reach the base film, and, in this case, it is possible to further increase the contact area with the cleaning liquid in the thickness direction of the layer containing the water-soluble resin.

Furthermore, in a case where the thermosetting silicone resin compound having, as a main skeleton, dimethylcloxan having high permeability of a cleaning liquid is used for a release component in the coating film obtained by layering the layer containing the release component on the outermost surface, the cleaning liquid easily permeates from the coating film surface and reaches the layer containing the water-soluble resin, and formation of the scratches, the cuts, and the holes promotes permeation, so that it is possible to dissolve the water-soluble resin in the lower layer in a shorter time.

On the other hand, depending on the physical properties and the compositions of the base film and each layer, and the state of the interface, part of the layer containing the water-soluble resin may be buried in the base film at the time of formation of the scratches, the cuts, or the holes, and the cleaning liquid may not spread to details. In that case, the scratches, the cuts, or the holes are preferably formed so as to penetrate the base film, and penetrate the base film, so that a portion that is originally buried is pushed out to a back surface side of the base film and can be avoided from being buried.

Furthermore, in a case where the coating film is provided only on one surface of the base film, scratches, cuts, or holes that reach the coating film may be formed on the surface on the no coating film side of the base film. By forming scratches or the like on the surface on the no coating film side of the base film, a force acts in a direction in which the layer containing the water-soluble resin is pushed out from the base film, so that it is possible to avoid the layer from being buried in the base film. In this case, it is also possible to expect permeation of the cleaning liquid from the coating film surface side and permeation of the cleaning liquid from the back surface of the base film through scratches, cuts, or holes on the base film side, so that it is possible to further promote dissolution of the water-soluble resin.

Furthermore, when scratches are formed, it is preferable to form the scratches such that an angle (acute angle) formed by the longitudinal direction of the scratches and a conveyance direction is 60° or less while conveying the coated film. Alternatively, when cuts are formed, it is preferable to form the cuts such that the angle (acute angle) formed by the longitudinal direction of the cuts and the conveyance direction is 60° or less. Particularly when scratches or cuts that reach part of the base film are formed on the surface with the coating film, a conveyance tension of the film is large, and the angle between the longitudinal direction of the scratches or the cuts and the conveyance direction is 90°, the tension acts on the scratches or the cuts as it is at a right angle, and are concerned to cause elongation or breakage of the base film. Consequently, by setting the angle between the longitudinal direction of the scratches or the cuts and the conveyance direction to an angle smaller than 90°, it is possible to reduce the force that acts on the scratches or the cuts at the right angle. The angle formed by the longitudinal direction of the scratches and the conveyance direction is preferably 60° or less, and the film hardly elongates or breaks.

Since, as the temperature of the cleaning liquid to be supplied to the coating film is higher, a dissolution rate of the water-soluble resin is faster, the temperature of the cleaning liquid to be supplied to the coated film is preferably 40°C or more. On the other hand, to suppress heat from changing the dimension of the base film, the temperature of the cleaning liquid is preferably 150°C or less. Hence, it is preferable that the temperature of the cleaning liquid is adjusted according to the device configuration to be used such that the temperature of the cleaning liquid and the temperature of the film at a portion to which the cleaning liquid is supplied are respectively in the range of 40°C to 150°C.

The method for supplying the cleaning liquid to the coating film can be performed by immersing the coated film in the cleaning liquid stored in a liquid tank. As another method, a necessary amount of the cleaning liquid may be sprayed onto the coated film by a spray without using the liquid tank, or, in a case where the cleaning liquid is water, vapor may be sprayed. Furthermore, as long as the cleaning liquid can be supplied to the coating film, the cleaning liquid may be sprayed on either one surface or both surfaces of the coated film.

Subsequently, the coating film including the layer containing the water-soluble resin sufficiently dissolved by suppling the cleaning liquid can be easily removed by removing means. The removing means may be any method for, for example, bringing a rotating brush into contact with the coating film, continuously bringing a member having a ridge line into contact with the coating film and scraping the coating film, or blowing off the coating film with an air nozzle.

The above method can dissolve the water-soluble resin in a short time, so that it is possible to remove the coating film at a high speed without increasing the size of the liquid tank or increasing the amount of the waste liquid.

[Coating film removing equipment that removes coating film from coated film]

Preferable embodiments of the device that removes the coating film from the coated film (hereinafter, referred to as a coating film removing equipment) according to the present invention will be described with reference to the drawings. Note that the following description exemplifies the embodiments according to the present invention, the present invention is not limited thereto, and various modifications can be made without departing from the gist of the present invention.

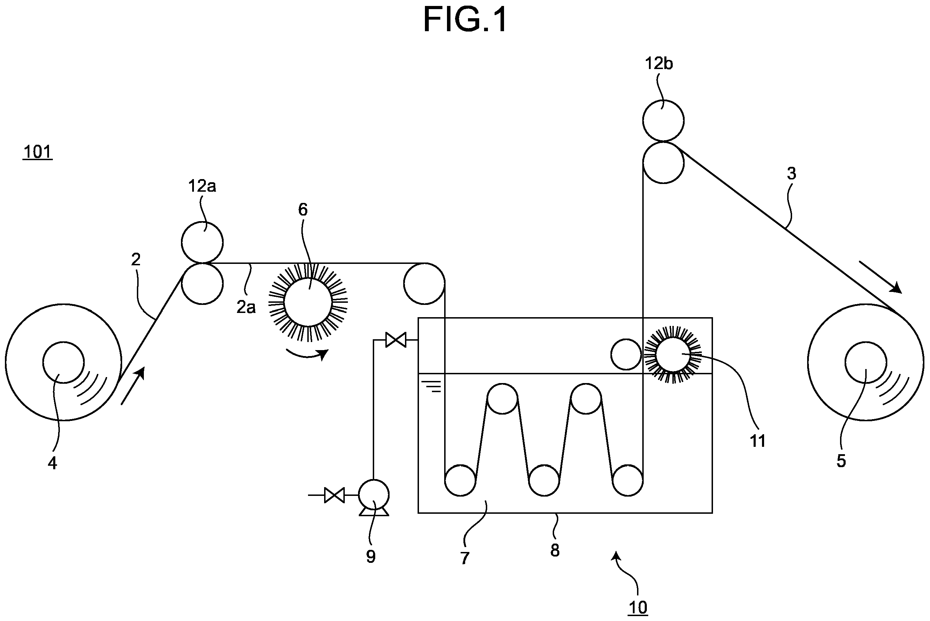

FIG. 1 is a schematic view of a coating film removing equipment 101 according to a first embodiment of the present invention. As illustrated in FIG. 1, the coating film removing equipment 101 includes an unwinding device 4 that unwinds a coated film 2, and a winding device 5 that winds a base film 3 after a coating film is removed. Between the unwinding device 4 and the winding device 5, there are provided a coating film damaging mechanism 6 that scratches the coating film on a surface 2a on the coating film side of the coated film 2, a cleaning liquid supplying mechanism 10 that supplies a cleaning liquid 7 to the scratched coating film of the coated film 2, and a removing mechanism 11 that removes the coating film containing the cleaning liquid 7 from the coated film 2 in which the cleaning liquid 7 has been supplied to the coating film.

The coated film 2 illustrated in FIG. 1 includes the coating film formed on one surface of the film, and the coating film damaging mechanism 6 is installed facing the surface 2a on the coating film side of the coated film 2. In a case where the coating films are formed on the both surfaces of the coated film 2, the coating film damaging mechanisms 6 may be provided facing the respective coating film surfaces.

The cleaning liquid supplying mechanism 10 includes a liquid tank 8 that stores the cleaning liquid 7 and a pump 9 that feeds the cleaning liquid 7 from an unillustrated tank, and continuously applies the cleaning liquid 7 to the coated film 2 by conveying the coated film 2 while immersing the coated film 2 in the cleaning liquid 7 in the liquid tank 8. The cleaning liquid supplying mechanism 10 may be any mechanism such as a spray or a nozzle as long as the mechanism can supply the cleaning liquid 7 to the coating film.

The coated film 2 unwound from the unwinding device 4 is conveyed by a conveyance mechanism including driving devices 12a and 12b, and, before the cleaning liquid supplying mechanism 10 applies the cleaning liquid 7, the coating film damaging mechanism 6 scratches the coating film.

The coating film damaging mechanism 6 includes a brush roll. By using the brush roll that can efficiently scratch the coating film, it is possible to rub and scratch the coating film surface, and expect the effect of removing the coating film. The brush roll can continuously scratch the coating film by conveying the coated film 2 without rotating. It is preferable to rotate the brush to form more scratches because, as the rotational speed becomes higher, more bristles of the brush are more likely to come into contact with the coating film, and the amount of scratches becomes larger. Furthermore, it is preferable to rotate the brush roll because shavings of the coating film produced by damaging the coating film do not stay at one place and are discharged. Furthermore, although FIG. 1 illustrates a case where a rotation direction of the brush roll is an opposite direction to the conveyance direction, the rotation direction of the brush roll may be any one of the same direction as and the opposite direction to the conveyance direction of the coated film 2, and is not particularly limited as long as the coating film is scratched.

Although a material of the bristles of the brush roll may be appropriately selected from bristles made of a resin, bristles made of metal, animal bristles, plant fibers, and the like, and is not particularly limited as long as the bristles can scratch the coating film, it is possible to easily scratch the coating film by selecting the material having higher hardness than that of the coating film. The bristles are preferably thin and highly dense, and can form more scratches.

Furthermore, it is also possible to use as the coating film damaging mechanism 6 a roller or the like having irregularities formed on the cylindrical surface, and rub and scratch the coating film. In this case, it is preferable to knurl the surface of the roller or a round bar, or form an irregularity shape by etching or engraving.

The removing mechanism 11 includes a brush roll similar to that used by the coating film damaging mechanism 6. The removing mechanism 11 includes a mechanism that rotates the brush roll made of the metal or the resin in the same direction as or the opposite direction to the conveyance direction, and directly brings the mechanism into contact with the coating film surface of the coated film 2 to remove the cleaning liquid and the coating film. As the removing mechanism 11, a metal plate having a sharp tip that is in direct contact with the coated film 2 may be provided, a plate made of the resin may be provided, or a thin plate that is made of the metal and is pressed against the coated film 2 and bends like a blade may be provided. Alternatively, the coating film may be wiped and removed by pressing the removing mechanism against the coated film 2 using a waste cloth or a cloth, or may be blown off by an air nozzle.

Furthermore, although not illustrated, a structure that sprays a clean cleaning liquid that is not mixed with impurities such as foreign materials and dries the cleaning liquid by the air nozzle may be added for rinse cleaning after the removing mechanism 11.

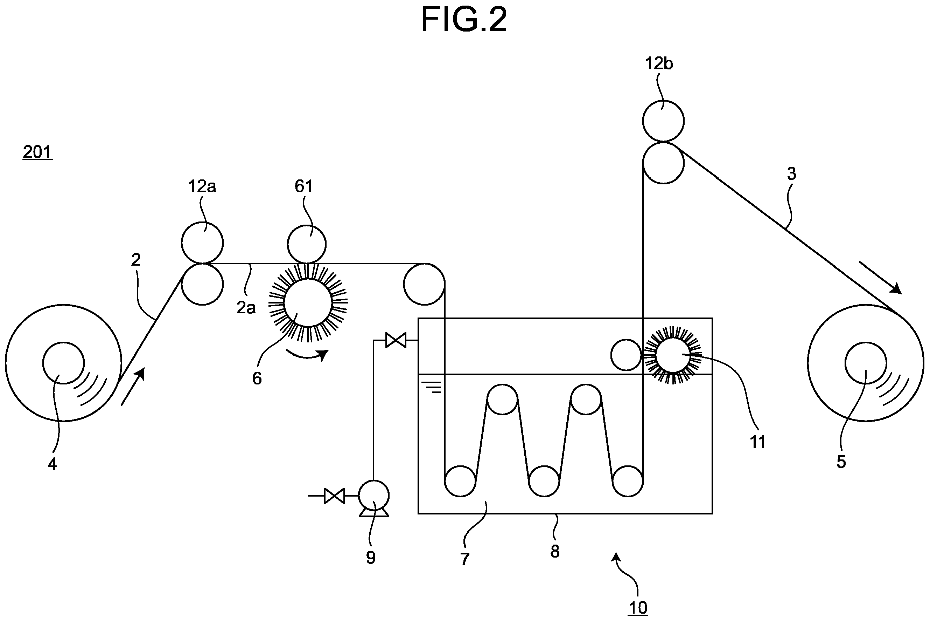

FIG. 2 is a schematic view of a coating film removing equipment 201 according to a second embodiment of the present invention. In the second embodiment, as illustrated in FIG. 2, a backup roll 61 is provided at a position facing a brush roll of a coating film damaging mechanism 6 provided in the first embodiment with a coated film 2 interposed between the backup roll 61 and the coating film damaging mechanism 6.

When the conveyance tension of the coated film 2 is small or when the brush roll rotates at a high speed, a force that pushes the coated film 2 to the opposite side of the brush roll acts, the coated film 2 floats at a minute cycle, and therefore a contact force between the brush roll and the coated film 2 becomes insufficient, and the number and the depth of scratches may decrease. Consequently, it is preferable to provide the backup roll 61 and prevent the coated film 2 from floating because it is possible to reliably bring the brush roll into contact with the coated film 2.

At this time, by making the material of the bristles of the brush roll harder than that of a base film 3, the bristles can penetrate a coating film and form scratches in part of the base film, too, so that it is possible to more reliably scratch the entire area in the thickness direction of the coating film.

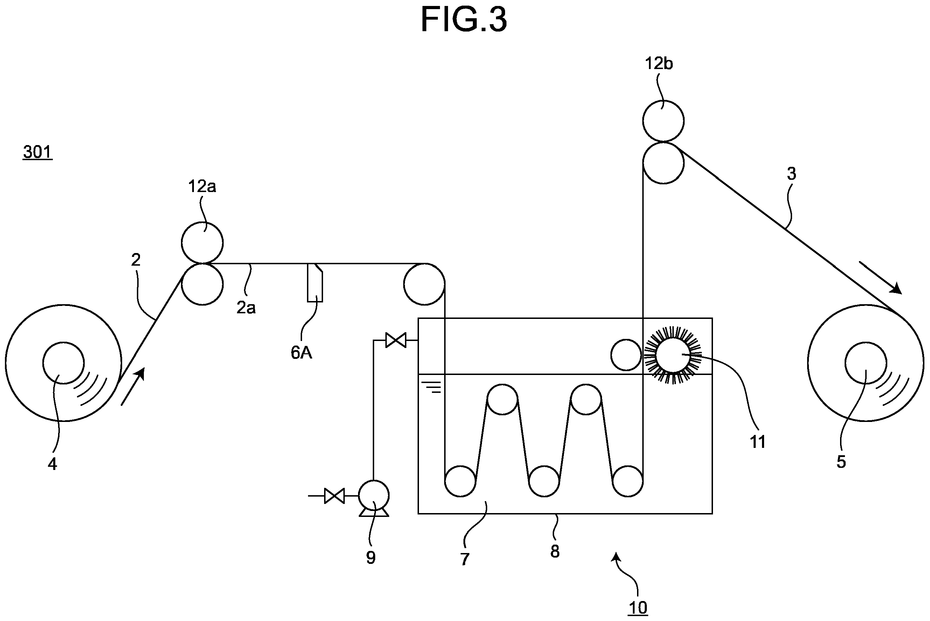

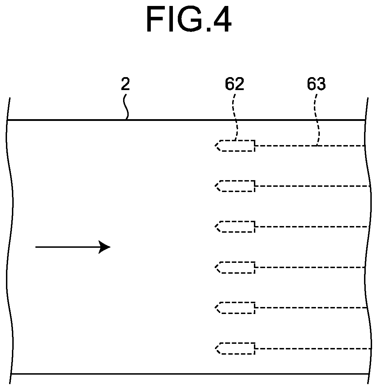

FIG. 3 is a schematic view of a coating film removing equipment 301 according to a third embodiment of the present invention. FIG. 4 is a schematic top view of a coating film damaging mechanism 6A in FIG. 3. In the third embodiment, as illustrated in FIGS. 3 and 4, a plurality of cutters 62 are provided as the coating film damaging mechanism 6A in a width direction instead of a brush roll provided in the first embodiment to form cuts 63 on a coating film. Note that FIG. 4 illustrates that the coating film damaging mechanism 6A is observed through a coated film 2, the coating film damaging mechanism 6A and the cuts 63 are not actually visible, and the cutters 62 and the cuts 63 are indicated by chain lines.

In general, the thickness of a coating film is formed thinner than the thickness of the base film, so that it is possible to form the cuts 63 in the coating film without penetrating the base film only by lightly placing the cutters 62 along the surface 2a on the coating film side. Furthermore, by largely adjusting the pressing amount of the cutters 62 against the coating film and the conveyance tension of the coated film 2, it is also possible to form cuts that reach not only the coating film, but also part of the base film. Since the number of the cuts 63 is determined by the number of the cutters 62 and an arrangement pitch, the desired number of the cuts 63 may be appropriately adjusted.

The cutter 62 may be a rotary round blade, or may be a sharp member having a sharp tip to cause contact.

The material of the cutter 62 is not particularly limited as long as the cutter 62 is made using a metal, ceramic, a resin, or the like and the tip is processed sharply.

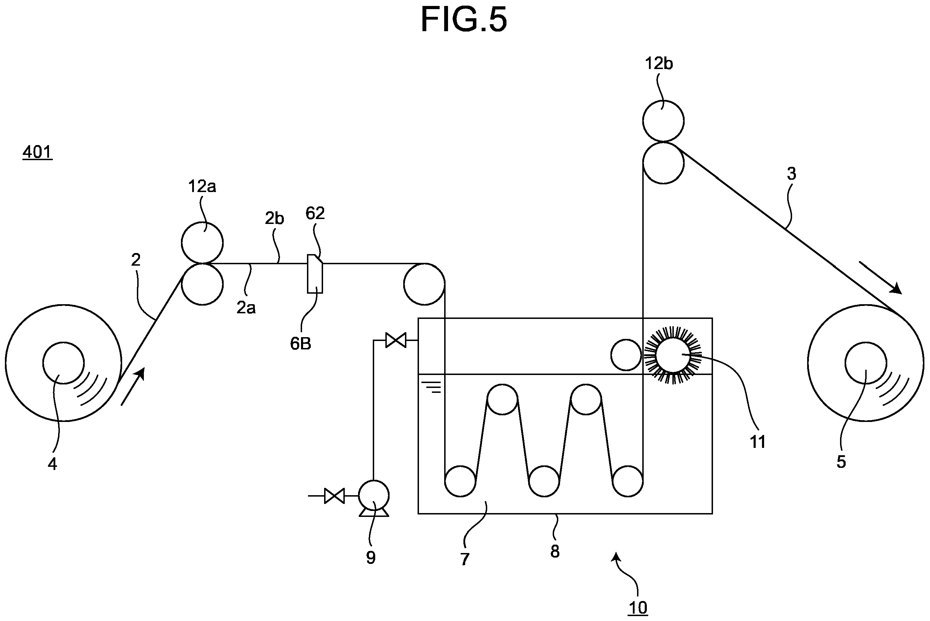

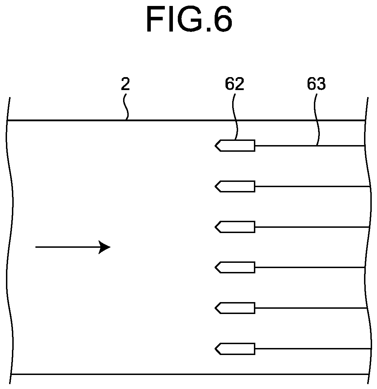

FIG. 5 is a schematic view of a coating film removing equipment 401 according to a fourth embodiment of the present invention. FIG. 6 is a schematic top view of a coating film damaging mechanism 6B in FIG. 5. In the fourth embodiment, as illustrated in FIGS. 5 and 6, the pressing amount of cutters 62 of a coating film damaging mechanism 6A provided in the third embodiment is increased, cuts that penetrate a base film are formed, and cuts are formed in the entire area in the thickness direction of a coating film.

When a coated film 2 is immersed in a cleaning liquid 7 stored in a liquid tank 8 of a cleaning liquid supplying mechanism 10, the cleaning liquid 7 is also supplied to a surface 2a on the coating film side and to a surface 2b on the no coating film side through cuts 63 of the base film in the coating film removing equipment 401, so that it is possible to efficiently dissolve the water-soluble resin.

In a case where the cleaning liquid supplying mechanism 10 performs spraying using a spray or the like, spraying may be performed only on the side of the surface 2a on the coating film side, and, preferably, by performing spraying on both surfaces of the coated film 2, it is possible to efficiently dissolve the water-soluble resin similarly to the case where the coated film 2 is immersed in the cleaning liquid 7 stored in the liquid tank 8.

Furthermore, in a case where the coating films are formed on the both surfaces of the film, and the cleaning liquid 7 is supplied to coating films by spraying using a spray or the like, the cleaning liquid spreads over the coating films through the cuts of the base film, so that it is possible to dissolve the water-soluble resin even when the cleaning liquid is supplied to either one of the surfaces, yet it is more preferable to supply the cleaning liquid to the both surfaces and efficiently dissolve the water-soluble resin.

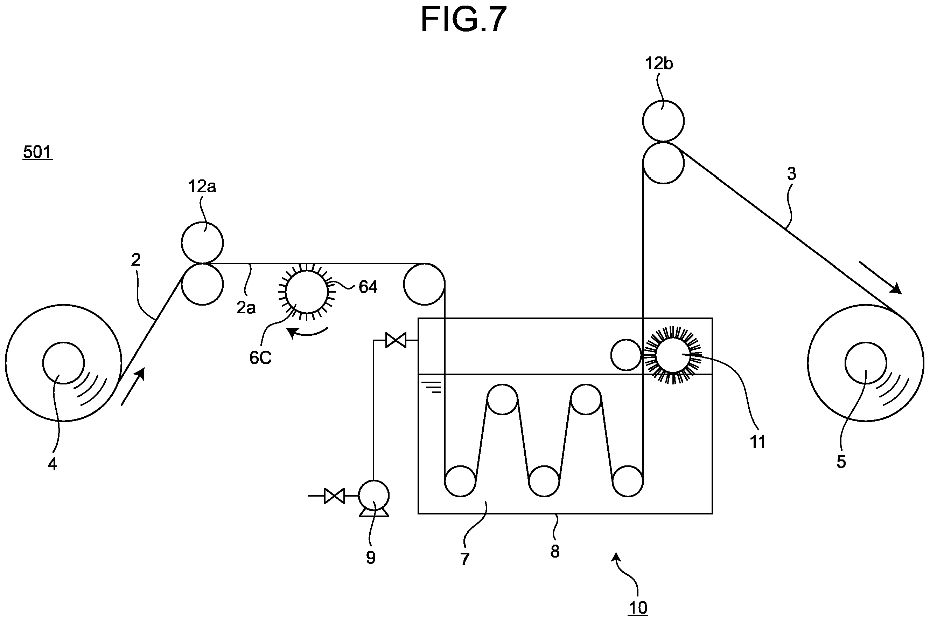

FIG. 7 is a schematic view of a coating film removing equipment 501 according to a fifth embodiment of the present invention. In the fifth embodiment, instead of a brush roll provided in the first embodiment, as the coating film damaging mechanism 6C, a roller 64 provided with sharp protrusions on the cylindrical surface is brought into contact with a coating film to form holes in the coating film.

By rotating the roller 64 at the same circumferential speed as a conveyance speed of the coated film 2, it is possible to form holes having substantially the same shape as the protrusion shape formed on the surface. When the roller 64 is not rotated, it is possible to form cuts similar to those of the cutters in the third embodiment. Furthermore, by rotating the roller 64 at a circumferential speed different from the conveyance speed or reversely rotating the roller 64 with respect to the conveyance direction, it is possible to form holes extending in the conveyance direction according to a circumferential speed difference. The shapes of the holes are not particularly limited, and may be any shapes such as round holes, elongated holes, or polygonal holes.

The sharp protrusions of the roller 64 can be embodied by, for example, implanting a needle-like member such as a needle-point holder on the cylindrical surface or forming sharp protrusions on the cylindrical surface by laser engraving or machining. In general, the thickness of a coating film is formed thinner than the thickness of the base film, so that it is possible to form holes in the coating film without penetrating the base film only by making the roller 64 lightly abut on the coating film surface. Furthermore, it is also possible to form holes that reach not only the coating film but also part of the base film by largely adjusting the pressing amount of the roller 64 against the coating film and the conveyance tension of the coated film 2.

Since the number of the holes is determined by the number of the protrusions and the arrangement pitch, the desired number of the holes may be appropriately adjusted. The material of the protrusion is not particularly limited as long as the protrusion is made using a metal, ceramic, a resin, or the like, and can form at least holes in the coating film.

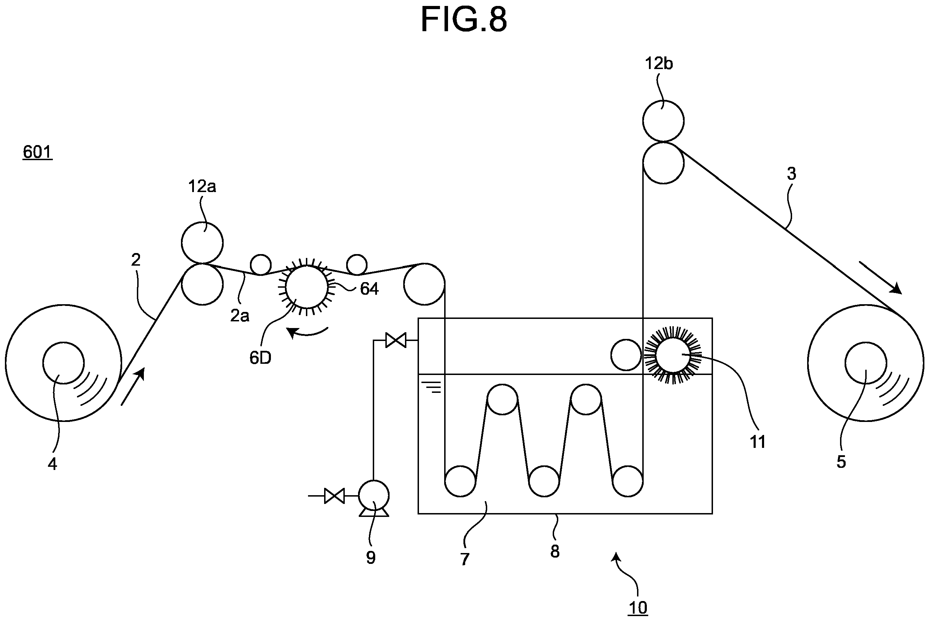

FIG. 8 is a schematic view of a coating film removing equipment 601 according to a sixth embodiment of the present invention. In the sixth embodiment, a coating film damaging mechanism 6D has the increased pressing amount of a roller 64 provided with sharp protrusions on the cylindrical surface in the fifth embodiment illustrated in FIG. 7 to form holes that penetrate a base film, and form the holes in the entire area in the thickness direction of the coating film.

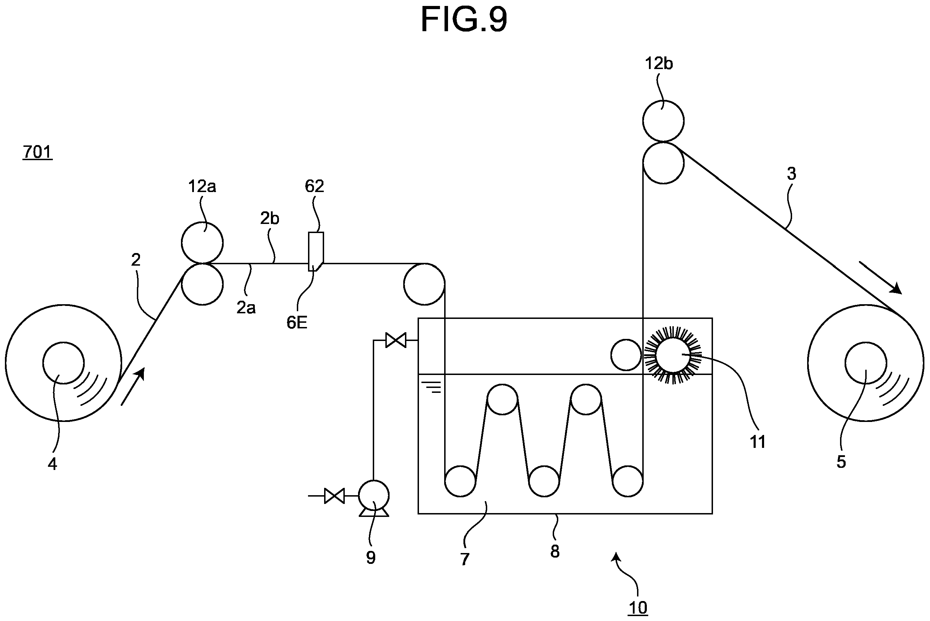

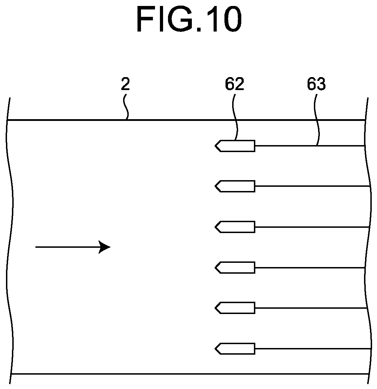

FIG. 9 is a schematic view of a coating film removing equipment 701 according to a seventh embodiment of the present invention. FIG. 10 is a schematic top view of a coating film damaging mechanism 6E in FIG. 9. In the seventh embodiment, the coating film damaging mechanism 6E includes cutters 62 provided in the third embodiment and provided on the side of a surface 2b on the no coating film side to penetrate a base film and form cuts in the coating film.

Depending on the physical properties and the compositions of the base film and the coating film, and the state of an interface between the base film and the coating film, part of the coating film may be buried in the base film, and a cleaning liquid 7 may not spared to the details when scratches are formed. In this case, it is preferable to form scratches on the surface 2b on the no coating film side of the coated base film 2 because the coating film is pushed in a direction away from the base film, and there is no concern that the coating film is buried in the base film.

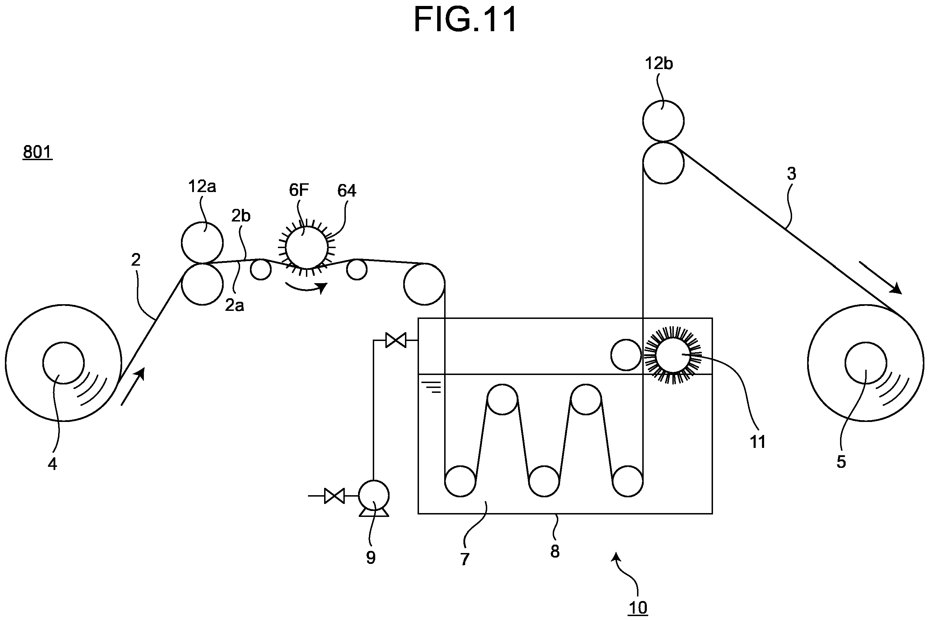

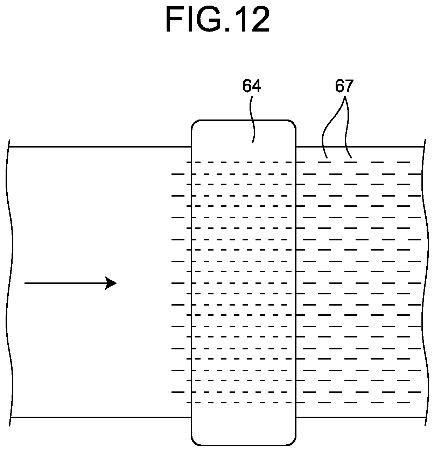

FIG. 11 is a schematic view of a coating film removing equipment 801 according to an eighth embodiment of the present invention. FIG. 12 is a schematic top view of a coating film damaging mechanism 6F in FIG. 11. In the eighth embodiment, the coating film damaging mechanism 6F includes a roller 64 provided with sharp protrusions on the cylindrical surface provided in the sixth embodiment and provided on the side of a surface 2b on the no coating film side, and penetrates a base film and forms holes 67 in a coating film. The same functions and effects as those of the seventh embodiment described above are exhibited.

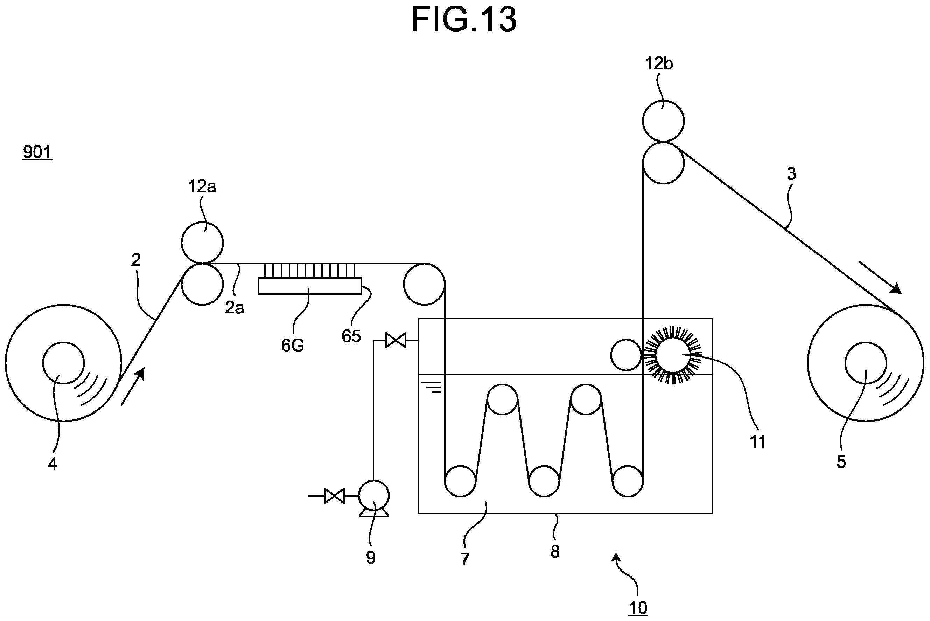

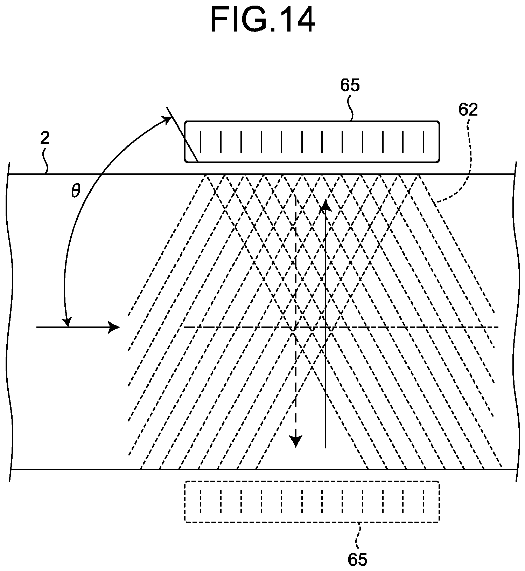

FIG. 13 is a schematic view of a coating film removing equipment 901 according to a ninth embodiment of the present invention. FIG. 14 is a schematic top view of a coating film damaging mechanism 6G in FIG. 13. The coating film damaging mechanism 6G in the ninth embodiment includes a needle-point holder member 65 provided with a plurality of sharp protrusions or cutters, and moving means (not illustrated) of the member 65. The coating film damaging mechanism 6G is provided on the side of a surface 2a on the coating film side, and moves the member 65 in the width direction of the coated film 2 using the moving means to form the cuts 62 in the coating film or the cuts 62 in part of the coating film and the base film in the thickness direction.

By repeatedly reciprocating the member 65 while conveying the coated film 2, it is possible to form the cuts 62 oblique to the conveyance direction. In this case, θ that is an angle (acute angle) formed between a longitudinal direction of the cuts 62 and the conveyance direction is preferably 60 degrees or less.

Although a tension is applied while the film is conveyed, when the angle θ exceeds 60 degrees, a force obtained by multiplying the applied tension with sinθ, that is, a force of 87% or more of the tension acts on the cuts 62 at a right angle, and therefore applying a large tension is concerned to elongate or break the base film. Since, particularly when there are the cuts 62 that reach part of the base film in the thickness direction, the film is likely to elongate or break, it is preferable to make the angle θ 60° or less.

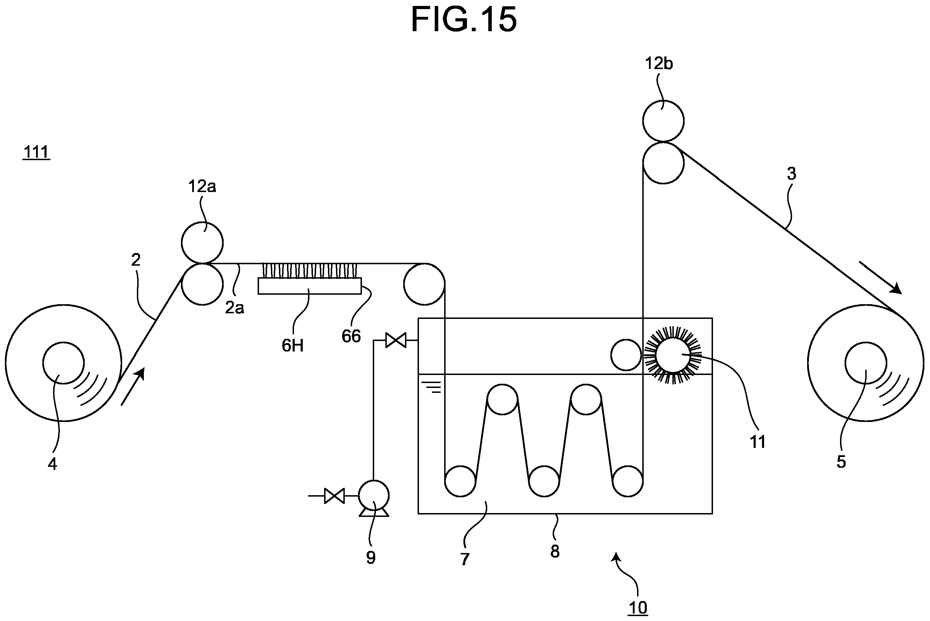

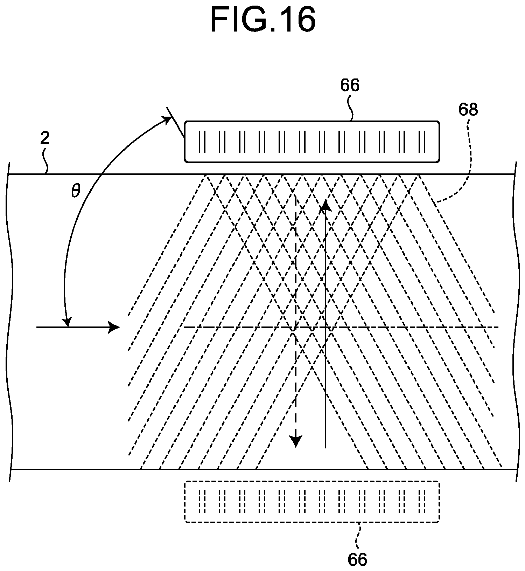

FIG. 15 is a schematic view of a coating film removing equipment 111 according to a tenth embodiment of the present invention. FIG. 16 is a schematic top view of a coating film damaging mechanism 6 in FIG. 15. In the tenth embodiment, instead of sharp protrusions in the ninth embodiment or a needle-point holder member 65 provided with a plurality of cutters, the coating film damaging mechanism 6H brings a band-like brush 66 into contact with a coating film to rub and form scratches 68 thereon. By repeatedly reciprocating the brush 66 while conveying the coated film 2, the coating film removing equipment 111 can form the scratches 68 oblique to the conveyance direction. In this case, similar to the tenth embodiment, θ that is an angle (acute angle) formed by the longitudinal direction of the scratches 68 and the conveyance direction is preferably 60 degrees or less.

A plurality of coating film damaging mechanisms 6 to 6H described in the first to tenth embodiments may be provided in the film conveyance direction. By providing the plurality of the coating film damaging mechanisms 6 to 6 H, it is possible to form more scratches, cuts, and holes, and it is possible to expect removing of the coating film at a higher speed. Furthermore, this is also effective when the water-soluble resin is hardly dissolved due to the influence of the composition and the thickness of the coating film.

As described above, by using the coating film removing method and the coating film removing equipment according to the present invention, it is possible to dissolve the water-soluble resin in a short time from the surface of the coated film using the cleaning liquid, and remove the coating film at a high speed. As a result, it is possible to obtain highly pure resin chips that contain no foreign material at low cost without significantly increasing the environmental load.

Examples

Hereinafter, although the present invention will be described citing Examples, the present invention is not necessarily limited thereto.

<Coated Film>

Three types of coated films described below were made.

<Coated Film a>

A coating film made of a polyvinyl alcohol resin having the film thickness of 0.1 μm was formed as a layer containing a water-soluble resin on a base film made of polyethylene terephthalate and having the thickness of 30 μm and the width of 100 mm.
Furthermore, a coating film made of a curable silicone resin having the film thickness of 0.1 μm was formed as a layer containing a release component thereon as follows with reference to a coating material described in JP 2015-189226 A.
Materials used

· Thermosetting silicone, made by Shin-Etsu Chemical Co., Ltd., product name "KS-847 T": 100 parts by mass
· Platinum catalyst, made by Shin-Etsu Chemical Co., Ltd., product name "CAT-PL-50 T": three parts by mass

The coating material was prepared by dissolving the above thermosetting silicone and platinum catalyst in a mixed liquid of toluene and MEK (the mass ratio of toluene: MEK was 1: 1) as a solvent such that a solid content was 1.8 mass%. Next, a coating material was applied onto the coating made of the polyvinyl alcohol resin using a bar coater, and dried in an oven at 90°C for 20 seconds to form a coating film of a release component, and obtain a coated film a.

<Coated Film b>

A coating film made of a polyvinyl alcohol resin having the film thickness of 0.1 μm was formed as a layer containing a water-soluble resin on a base film made of polyethylene terephthalate and having the thickness of 30 μm and the width of 100 mm.
Furthermore, a coating film made of a resin containing a compound having a long chain alkyl group having the film thickness of 0.1 μm was formed as a layer containing a release component thereon as follows with reference to a coating material described in JP 2019-137005 A.

Materials used

· Long-chain alkyl group-containing compound, made by Lion Specialty Chemicals Co., Ltd, product name "Pyroyl" 1050: 10 parts by mass when converted in terms of solid content
· Crosslinking agent, made by Sumitomo Chemical Co., Ltd., product name "Sumimar" M-55, 2.5 parts by mass when converted in terms of solid content
· Acid catalyst, made by Tayca Co., Ltd., product name "TAYCACURE" AC-700: 1.3 parts by mass when converted in terms of solid content
· Solvent, toluene 400 parts by mass, MEK 130 parts by mass

The coating material was prepared by dissolving the above long-chain alkyl group-containing compound, crosslinking agent, and acid catalyst in the solvent. Next, a coating material was applied onto the coating made of the polyvinyl alcohol resin using a gravure coater, predried at 100°C, and then heated and dried at 160°C to form a coating film of a release component, and obtain a coated film b.

<Coated Film c>

A coating film made of a polyvinyl alcohol resin having the film thickness of 0.1 μm was formed as a layer containing a water-soluble resin on a base film made of polyethylene terephthalate and having the thickness of 30 μm and the width of 100 mm.
Furthermore, a coating film made of a curable silicone resin having the film thickness of 0.1 μm was formed as a layer containing a release component thereon as follows with reference to a coating material described in WO 2013/145864 W.
Materials used

· Active energy line curable component, dipentaerythritol hexaacrylate, made by Shin Nakamura Chemical Co., Ltd., product name "A-DPH", 100 mass% of solid content: 99.0 parts by mass
· Silicone-based component, polyether-modified acryloyl group-containing polydimethylsiloxane, made by BYK-Chemie GmbH, product name "BYK-3500", 100 mass% of solid content: 1.0 parts by mass
· 2-methyl-1 [4-(methylthio) phenyl]-2 morpholinopropane-1-one that is a photoinitiator, made by BASF SE, product name "IRGACURE 907": 5.0 parts by mass

The coating material was prepared by diluting the above dipentaerythritol hexaacrylate, polyether-modified acryloyl group-containing polydimethylsiloxane, and photoinitiator with a mixed solution of isopropyl alcohol and methyl ethyl ketone (mixed mass ratio: 3: 1), and obtaining the diluted solution as a release agent solution (20 mass% of the solid content). This release agent solution was applied onto the coating made of the polyvinyl alcohol resin film using the bar coater such that the thickness after curing was 0.97 $\mu$m, and the coating was dried at 80°C for one minute. Thereafter, the release agent composition was cured by irradiation with ultraviolet rays (integrated light amount: 250 mJ/cm$^2$) to form a coating film of a release component, and obtain the coated film c.

<Removing Evaluation Method>

(1) Removing Property of Coating film

Removing was evaluated by a following method using a commercially available dynepen (surface energy: 30 or 70 mN/m). When a drawing was drawn on a sample surface with the dynepen in an environment at a room temperature of 23°C and this state was maintained for four seconds or more, it was determined that the surface energy of the sample surface was higher than the surface energy of this dynepen. When the coating films of the release components of the coated films a to c remain on the surface, these surface energies are less than 30 mN/m, and therefore a reagent of any dynepen is repelled on the sample surface, and the drawing cannot be retained. On the other hand, when the coating film of the release component is removed and the polyvinyl alcohol resin is exposed, the surface energy is 70 mN/m or more, so that any dynepen can retain the drawing. When both of the coating film of the release component and the coating film made of the water-soluble polyvinyl alcohol resin are removed, and polyethylene terephthalate is exposed, the surface energy is 43.8 mN/m, and therefore the dynepen of 30 mN/m can retain the drawing, yet the dynepen of 70 mN/m cannot retain the drawing. Whether or not the coating film of the coated film could be removed was determined by the above evaluation method.

(2) Quality of Recycled Resin Chips

(i) Melting Film Property

After a coating film is removed from a coated film, a base film is collected. The collected base film is pulverized by a crusher, then recycled resin chips granulated by a granulator are dried at 180°C for two hours, then loaded into an extruder, melted and extruded at 280°C, formed in a sheet on a cast drum cooled to 25°C, and whether or not a polyethylene terephthalate film can be made without any problem is checked.

(ii) Intrinsic Viscosity

The intrinsic viscosity IV (R) of the sheet obtained from above (i) is measured. The intrinsic viscosity IV (R) is determined by dissolving a polyethylene terephthalate film in 100 ml of orthochlorophenol (solution concentration C = 1.2 g/dl), and measuring the viscosity of this solution at 25°C using an Ostwald viscometer. Furthermore, the viscosity of the solvent is measured likewise. [$\eta$] (dl/g) is calculated using the obtained solution viscosity and solvent viscosity according to following equation (a), and the obtained value is taken as the intrinsic viscosity.

$$(a) \quad \eta sp/C = [\eta] + K[\eta]^2 \cdot C$$

(Here, $\eta sp$ = (solution viscosity (dl/g)/solvent viscosity (dl/g)) - 1, and K represents a Huggins constant (0.343).)

Next, before the coated film is made, the intrinsic viscosity IV (I) of the base film that has been sampled in advance and on which the coating film is not yet formed is measured likewise.

Since a decrease in quality of the resin chips caused by mixing of foreign materials or the like appears as a difference between IV (R) and IV (I), ΔIV is calculated according to following formula (b), and following determination is made based on the obtained value.

$$(b) \quad \Delta IV = IV(R) - IV(I)$$

· The difference in intrinsic viscosity is 0.05 or less: the difference is in a range that does not matter as the quality of the recycled resin chips.
· The difference in intrinsic viscosity is more than 0.05 and less than 0.2: the quality of the recycled resin chips is slightly poor, yet is within a range of practical use.
The difference in intrinsic viscosity exceeds 0.2: the quality of the recycled resin chips cannot endure practical use.

<Example 1>

As a coated film 2, the coated film a including a coating film formed on one surface of a base film was used and set to an unwinding device 4 of a removing equipment 101 illustrated in FIG. 1.

A coating film damaging mechanism 6 was reversely rotated at 500 rpm with respect to a film conveyance direction using a brush roll, and was brought into contact with the coating film surface to rub and scratch. A material of bristles of the brush roll is made of a nylon resin and has a wire diameter of 0.15 mm.

As a cleaning liquid 7, warm water at 60°C was used. A cleaning liquid supplying mechanism 10 stored the cleaning liquid 7 in a liquid tank 8, led the coated film 2 to the liquid tank 8, and dissolved the coating film made of the polyvinyl alcohol resin while immersing and conveying the coated film 2 in the cleaning liquid 7. The length of the coated film 2 immersed in the cleaning liquid 7 was 0.5 m.

The conveyance tension of the film was 60 N, and the conveyance speed was 50 m/min. Hence, a time during which the coated film 2 is in contact with the cleaning liquid 7 is 0.6 seconds.

A removing mechanism 11 used a brush roll made of a metal, reversely rotated at 500 rpm with respect to the film conveyance direction, and brought the brush roll into contact with the coating film surface to remove the coating film.

When the coating film was wound by a winding device 5, a base film 3 from which the coating film has been removed was sampled, and the removing state of the coating film was checked using the dynepen, it was confirmed that both of the coating films made of the curable silicone resin of the release component and the water-soluble polyvinyl alcohol resin could be removed.

Furthermore, after being collected, the base film 3 was pulverized by a crusher and formed into resin chips by a granulator. Thereafter, the resin chips were loaded into an extruder, melted and extruded at 280°C, and molded into a sheet shape on a cast drum cooled to 25°C to make a polyethylene terephthalate film. Bubbles, a gel, and the like were not confirmed in molten polymer, an abnormality such as an increase in pressure did not occur, either, and a polyethylene terephthalate film could be obtained. It was confirmed that the difference in intrinsic viscosity was 0.03, and the quality of the recycled resin chips was within a range that does not matter.

<Example 2>

As the coated film 2, the coated film a including the coating film formed on one surface of the base film was used and set to the unwinding device 4 of a removing equipment 901 illustrated in FIG. 13.

A coating film damaging mechanism 6G used a member 65 in which a plurality of stainless steel wires having the diameter of 1 mm were arranged as sharp protrusions at a pitch of 3 mm, brought along and into contact with the coating film surface, and reciprocated at a speed of 50 m/min in the film width direction to form cuts 62 in the coating film. As a result, the angle (acute angle) formed by the longitudinal direction of the cuts 62 and the conveyance direction was 45 degrees. Furthermore, it was visually checked that the cuts 62 reached part of the base film. The other conditions were the same as those in Example 1 to remove the coating film.

When the coating film was wound by the winding device 5, the base film 3 from which the coating film has been removed was sampled, and the removing state of the coating film was checked using the dynepen, it was confirmed that both of the coating films made of the curable silicone resin of the release component and the water-soluble polyvinyl alcohol resin could be removed.

Furthermore, after the base film 3 was collected, a polyethylene terephthalate film was made using the recycled resin chips similar to Example 1. Bubbles, a gel, and the like were not confirmed in molten polymer, an abnormality such as an increase in pressure did not occur, either, and a polyethylene terephthalate film could be obtained. It was confirmed that the difference in intrinsic viscosity was 0.05, and the quality of the recycled resin chips was within a range that does not matter.

<Example 3>

The coated film b including the coating film formed on one surface of a base film was used as the coated film 2, and the removing equipment 101 according to Example 1 was used to perform removing under the same conditions as those in Example 1.

When the coating film was wound by the winding device 5, the base film 3 from which the coating film has been removed was sampled, and the removing state of the coating film was checked using the dynepen, it was confirmed that coating films made of the resin containing the compound having the long chain alkyl group of the release component and the water-soluble polyvinyl alcohol resin could be removed.

Furthermore, after the base film 3 was collected, a polyethylene terephthalate film was made using the recycled resin chips similar to Example 1. Bubbles, a gel, and the like were not confirmed in molten polymer, an abnormality such as an increase in pressure did not occur, either, and a polyethylene terephthalate film could be obtained. It was confirmed that the difference in intrinsic viscosity was 0.04, and the quality of the recycled resin chips was within a range that does not matter.

<Example 4>

The coated film c including the coating film formed on one surface of the base film was used as the coated film 2, and the removing equipment 101 according to Example 1 was used to perform removing. The brush roll of the coating film damaging mechanism 6 reversely rotated at 1500 rpm with respect to the film conveyance direction, and was brought into contact with the coating film surface to rub and scratch. The other conditions were the same as those in Example 1.

When the coating film was wound by the winding device 5, the base film 3 from which the coating film has been removed was sampled, and the removing state of the coating film was checked using the dynepen, it was confirmed that both of the coating films made of the curable silicone resin of the release component and the water-soluble polyvinyl alcohol resin could be removed.

Furthermore, after the base film 3 was collected, a polyethylene terephthalate film was made using the recycled resin chips similar to Example 1. Bubbles, a gel, and the like were not confirmed in molten polymer, an abnormality such as an increase in pressure did not occur, either, and a polyethylene terephthalate film could be obtained. It was confirmed that the difference in intrinsic viscosity was 0.05, and the quality of the recycled resin chips was within a range that does not matter.

<Comparative Example 1>

The coated film a having the coating film formed on one surface of the base film was used as the coated film 2, and the removing equipment 101 in FIG. 1 from which the brush roll that is the coating film damaging mechanism 6 was detached was used to perform removing. The other conditions were the same as those in Example 1 to remove the coating film.

When the coating film was wound by the winding device 5, the base film 3 from which the coating film has been removed was sampled, and the removing state of the coating film was checked using the dynepen, it was confirmed that part of the coating films made of the curable silicone resin of the release component and the water-soluble polyvinyl alcohol resin remained.

Furthermore, after the base film 3 was collected, a polyethylene terephthalate film was made using the recycled resin chips similar to Example 1, and it was confirmed that bubbles were mixed in molten polymer. Furthermore, the difference in intrinsic viscosity of the made polyethylene terephthalate film was 0.23, and it was confirmed that the polyethylene terephthalate film could not be practically used in terms of quality of recycled resin chips.

Industrial Applicability

The coating film removing method and the coating film removing equipment that remove a coating film from a coated film according to the present invention are applicable as the coating film removing method and the coating film removing equipment that remove coating films not only from a film including a coating film containing a water-soluble resin on one surface of a base film, but also from a renewable resin film, paper film, and metal film including coating films including easily soluble resin layers.

Reference Signs List

2 COATED FILM
2a SURFACE ON COATING FILM SIDE
2b SURFACE ON NO COATING FILM SIDE
3 BASE FILM
4 UNWINDING DEVICE
5 WINDING DEVICE
6, 6A, 6B, 6C, 6D, 6E, 6F, 6G, 6H COATING FILM DAMAGING MECHANISM
7 CLEANING LIQUID
8 LIQUID TANK
9 PUMP
10 CLEANING LIQUID SUPPLYING MECHANISM

11 REMOVING MECHANISM
12a, 12b DRIVING DEVICE
61 BACKUP ROLL
62 CUTTER
63 CUT
64 ROLLER
65 MEMBER
66 BRUSH
67 HOLE
68 SCRATCH
101, 201, 301, 401, 501, 601, 701, 801, 901, 111 REMOVING EQUIPMENT

**Claims**

1. A coating film removing method for removing a coating film from a coated film including the coating film on at least one surface of a base film, the method comprising:

   forming a scratch, a cut, or a hole in the coating film on a surface on a coating film side of the coated film, or forming the scratch, the cut, or the hole that reaches the coating film on a surface on a no coating film side of the coated film; then bringing a cleaning liquid into contact with the coating film; and then removing the coating film containing the cleaning liquid from the coated film.

2. The coating film removing method for removing the coating film from the coated film according to claim 1, wherein,

   while the coated film is conveyed, the scratch is formed such that an angle (acute angle) formed by a longitudinal direction of the scratch and a conveyance direction is 60 degrees or less, or the cut is formed such that an angle (acute angle) formed by a longitudinal direction of the cut and the conveyance direction is 60 degrees or less.

3. The coating film removing method for removing the coating film from the coated film according to claim 1 or 2, wherein the coating film contains a water-soluble resin.

4. The coating film removing method for removing the coating film from the coated film according to claim 1 or 2, wherein the coating film contains a curable silicone resin.

5. The coating film removing method for removing the coating film from the coated film according to claim 3, wherein the cleaning liquid is water.

6. A coating film removing equipment configured to remove a coating film from a coated film including the coating film on at least one surface of a base film, the removing equipment comprising:

   a coating film damaging mechanism configured to form a scratch, a cut, or a hole in the coating film on a surface on a coating film side of the coated film, or form the scratch, the cut, or the hole that reaches the coating film on a surface on a no coating film side of the coated film;
   a cleaning liquid supplying mechanism configured to supply a cleaning liquid to the coating film of the coated film in which the scratch, the cut, or the hole has been formed; and
   a removing mechanism configured to remove the coating film containing the cleaning liquid from the coated film.

7. The coating film removing equipment that removes the coating film from the coated film according to claim 6, further comprising

   a conveyance mechanism configured to convey the coated film, wherein
   the coating film damaging mechanism is configured to form the scratch such that an angle (acute angle) formed by a longitudinal direction of the scratch and the conveyance direction is 60 degrees or less, or form the cut such that an angle (acute angle) formed by a longitudinal direction of the cut and the conveyance direction is 60 degrees or less.

8. The coating film removing equipment that removes the coating film from the coated film according to claim 6 or 7, further comprising:

   an unwinding device configured to unwind the coated film wound in a roll; and
   a winding device configured to wind the base film from which the coating film has been removed.

## FIG.1

# FIG.2

FIG.3

# FIG.4

# FIG.5

# FIG.6

# FIG.7

EP 4 446 372 A1

# FIG.8

EP 4 446 372 A1

# FIG.9

# FIG.10

FIG.11

# FIG.12

# FIG.13

EP 4 446 372 A1

# FIG.14

# FIG.15

FIG.16

**INTERNATIONAL SEARCH REPORT**

| International application No. |
|---|
| **PCT/JP2022/040912** |

**A. CLASSIFICATION OF SUBJECT MATTER**

*C08J 11/08*(2006.01)i; *B29B 17/00*(2006.01)i; *B29B 17/02*(2006.01)i; *B32B 7/06*(2019.01)i
FI:   B29B17/02 ZAB; B29B17/00; C08J11/08 ZAB; B32B7/06

According to International Patent Classification (IPC) or to both national classification and IPC

**B. FIELDS SEARCHED**

Minimum documentation searched (classification system followed by classification symbols)
   C08J11/08; B29B17/00; B29B17/02; B32B7/06

Documentation searched other than minimum documentation to the extent that such documents are included in the fields searched
   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-209511 A (NIPPON ZEON CO) 12 December 2019 (2019-12-12) claim 1, paragraphs [0008], [0024], [0059], [0081]-[0086], fig. 10 | 1-2, 6-8 |
| Y |  | 3-5 |
| Y | JP 2004-169005 A (TORAY IND INC) 17 June 2004 (2004-06-17) claims 1-5, 8-10, paragraphs [0018], [0027], [0039]-[0042] | 3-5 |
| A | JP 2000-025041 A (UNITIKA LTD) 25 January 2000 (2000-01-25) entire text | 1-8 |
| A | JP 2004-363140 A (TORAY IND INC) 24 December 2004 (2004-12-24) entire text | 1-8 |
| A | JP 2021-146682 A (UNITIKA TECHNOS KK) 27 September 2021 (2021-09-27) entire text | 1-8 |
| A | KR 10-0878986 B1 (YOU YOUNG IND CO., LTD.) 15 January 2009 (2009-01-15) entire text | 1-8 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 November 2022** | **06 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/040912**

| Patent document cited in search report | | | Publication date (day/month/year) | Patent family member(s) | Publication date (day/month/year) |
|---|---|---|---|---|---|
| JP | 2019-209511 | A | 12 December 2019 | (Family: none) | |
| JP | 2004-169005 | A | 17 June 2004 | (Family: none) | |
| JP | 2000-025041 | A | 25 January 2000 | (Family: none) | |
| JP | 2004-363140 | A | 24 December 2004 | (Family: none) | |
| JP | 2021-146682 | A | 27 September 2021 | (Family: none) | |
| KR | 10-0878986 | B1 | 15 January 2009 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004363140 A
- JP 2015189226 A
- JP 2019137005 A
- WO 2013145864 A